# EUROPÄISCHE PATENTSCHRIFT

(11) **EP 0 909 577 B1**
(45) Veröffentlichungstag und Bekanntmachung des Hinweises auf die Patenterteilung: **02.04.2003**
(21) Anmeldenummer: 98119267.7
(22) Anmeldetag: 13.10.1998
(51) Int. Cl.: B01D 53/04, B01D 46/10, B01D 46/42, F24F 3/16

(54) **Mobile Anlage zum Reinigen kontaminierter Luft**
Mobile appparatus for purifying polluted air
Appareil mobile pour l'epuration de l'air pollué

(30) Priorität: 15.10.1997 DE 29718284 U
(43) Veröffentlichungstag der Anmeldung: 21.04.1999
(73) Patentinhaber: Seka Schutzbelüftung GmbH, 76829 Landau/Pfalz (DE)
(72) Erfinder: Müller, Lothar, 76829 Landau/Pfalz (DE)
(74) Vertreter: Patentanwälte Möll und Bitterich

(56) Entgegenhaltungen:
- FR-A- 2 653 354
- GB-A- 2 164 870
- US-A- 4 838 903
- US-A- 5 399 319

## Beschreibung

Die Erfindung betrifft eine mobile Anlage zum Reinigen kontaminierter Luft gemäß dem Oberbegriff des Patentanspruchs 1.

Solche Anlagen haben ihr Einsatzgebiet hauptsächlich in örtlich begrenzten Bereichen, wie z.B. Deponien, Altlasten, Komposteranlagen, Fabrikationsstätten etc., wo es infolge der dortigen Arbeitsprozesse zu Schadstoffemissionen kommt. Durch Ausgasen, Boden- und Luftbewegungen etc. gelangen Schadstoffe in Gasund Partikelform aus dem Untergrund in die Luft und werden dort von den in diesem Bereich arbeitenden Menschen mit der Atemluft aufgenommen.

Um gesundheitliche Beeinträchtigungen der Menschen weitgehend auszuschließen, ist es bekannt, zur Reinigung der Atemluft stationäre Anlagen zu verwenden. Diese eignen sich jedoch nur für den Einsatz in stationären Einrichtungen, wie z.B. Büro- und Werkstatträumen. Darüber hinaus muß aber die Gesundheit auch der Menschen geschützt werden, die den Schadstoffen bei wechselnden Einsätzen vor Ort direkt ausgesetzt sind. Diese Gruppe stellen vor allem Geräteführer von Erdbewegungsmaschinen und Nutzfahrzeugen dar.

Zu diesem Zweck sind im wesentlichen drei Systeme bekannt.

Ein System sieht vor, daß der Fahrzeugführer eine Atemschutzmaske und gegebenenfalls einen Schutzanzug trägt. Damit ist allerdings eine erhebliche Komforteinschränkung für den Fahrer verbunden, was in manchen Fällen dazu führt, daß die Atemschutzmasken nicht getragen werden. Darüber hinaus unterliegen Atemschutzmasken und Schutzanzüge Tragzeitbegrenzungen, so daß sich ein kontinuierlicher Betrieb über längere Zeiträume nur schwer aufrecht erhalten läßt.

Aus diesem Grund wurden Lösungen entwickelt, die die gereinigte Atemluft direkt der Kabine zuführen. Der Fahrer kann sich damit ohne Einschränkung in seiner Kabine bewegen. Eine Lösung sieht vor, außerhalb der Kabine Stahlflaschen mit bis auf 300 bar komprimierter Atemluft zu installieren. Der Fahrerkabine wird die Atemluft aus den Flaschen zugeführt. Sind die Flaschen leer, werden sie in der Regel wiederbefüllt oder gegen volle ausgetauscht.

Neben dem umständlichen Austausch der Flaschen oder der zeitaufwendigen Befüllung an einer Containerstation mit Hochdruckkompressor sind es auch die je nach Größe der Deponie langen Anfahrtswege zur Station, die die Verwendung dieser Lösung auf Ausnahmefälle beschränken. Darüber hinaus sind die Anschaffung und Wartung dieser Systeme sehr teuer und erfordern eine sehr hohe Qualifikation der Bediener.

Aus diesem Grund ist man dazu übergegangen, mobile Filteranlagen meist an der Außenseite der Fahrzeuge anzubringen. Diese Anlagen saugen Luft aus der Umgebung an, leiten diese durch einen Filter und geben die so von schädlichen Stoffen gereinigte Luft in die Fahrerkabine. Die Energieversorgung erfolgt dabei über eine Gleichstrom-Lichtmaschine des Fahrzeugs.

Aus der DE-PS 44 21 911 C2 ist eine mobile Anlage bekannt, bei der die Luft über die Außenseite der Mantelfläche des Filters in den Filter geleitet wird. Die Luft durchströmt den Filter radial in Richtung dessen Längsachse und tritt im Bereich der Filterlängsachse gereinigt aus dem Filter aus.

Darüber hinaus ist aus der FR 2 653 354 A1 eine mobile Filteranlage bekannt mit einer Filter- und einer Gebläseeinheit. Die Filtereinheit setzt sich aus mehreren ringförmig ineinander angeordneten Filterelementen zusammen. Die Gebläseeinheit ist am stimseitigen Ende der Filteranlage in deren Längsachse angeordnet und bewirkt eine Durchströmung der Anlage, bei der die zu reinigende Luft radial über die Mantelfläche in die Filtereinheit eindringt und in axialer Richtung aus der Filteranlage austritt. Eine Umkehrung der Durchströmung ist ebenfalls erwähnt. Durch die besondere Anordnung der Gebläseeinheit wenigstens teilweise in dem axialen Hohlraum der Filtereinheit soll eine besonders gut handhabbare mobile Filteranlage entstehen.

Die Filtereinheit bei bekannten Anlagen ist im Aufbau gewöhnlich so gestaltet, daß die kontaminierte Luft erst einen Grob- und dann einen Feinstaubfilter durchströmt und dabei von Feststoffpartikeln gereinigt wird. Erst dann durchströmt die Luft einen Aktivkohlefilter, der die restlichen Schadstoffe eliminiert; der Aktivkohlefilter ist also in Durchströmrichtung das letzte Filterelement.

Bei diesen Filtern hat sich bislang gezeigt, daß die kritischen Standzeiten innerhalb eines Filters die Aktivkohlefilterelemente betreffen. Das heißt, wenn die Aktivkohlefilterelemente bereits verbraucht sind, haben die Grob- und Feinstaubfilterelemente noch immer genügend Filterkapazität frei, um weiterbetrieben zu werden. Die Filterkapazität verhält sich dabei proportional zum Volumen des Filterelements.

Die beschriebenen Zusammenhänge führen bei konventionellen Anlagen dazu, daß diese Anlagen sehr groß und schwer und damit unhandlich sind, wenn vernünftige Standzeiten vor allem der Aktivkohlefilterelemente erzielt werden sollen. Will man kompakte Anlagen bauen, verkürzen sich mit der Verringerung des Aktivkohlefiltervolumens automatisch auch die Standzeiten der Aktivkohlefilter, so daß sehr häufig das Aktivkohlefilterelement gewechselt werden muß. Bei jedem Filterwechsel ist man dabei vor die Frage gestellt, ob Grob- und Feinstaubfilter mitgewechselt werden sollen, obwohl sie nur teilweise verbraucht sind, oder ob sie zu einem späteren Zeitpunkt extra gewechselt werden, was mit einem außerordentlichen Arbeitsaufwand verbunden ist.

Vor diesem Hintergrund liegt der Erfindung die Aufgabe zugrunde, eine Anlage anzugeben, die eine kompakte und damit handliche Bauweise ermöglicht, ohne dabei Einbußen hinsichtlich der Filterstandzeiten, der Filterleistung oder des Wartungsaufwandes hinnehmen zu müssen.

Gemäß der Erfindung wird diese Aufgabe durch eine Anlage mit den Merkmalen des Patentanspruchs 1 gelöst.

Vorteilhafte Weiterbildungen ergeben sich aus den Unteransprüchen.

Der Grundgedanke der Erfindung liegt darin, die Anlage dahingehend zu optimieren, daß sowohl Grob- und Feinstaubfilter, als auch Aktivkohlefilter etwa die gleichen Standzeiten aufweisen. Dies gelingt, indem die Durchströmrichtung durch den Filter umgekehrt wird, d.h. der Filter in einer erfindungsgemäßen Anlage wird radial ausgehend von der Filterlängsachse in Richtung Mantelfläche durchströmt. Das bringt mit sich, daß der Aktivkohlefilter, der, wie beschrieben, als letztes Filterelement durchströmt werden soll, im Bereich der Mantelfläche angeordnet ist.

Dadurch ist eine andere volumenmäßige Aufteilung des Filters zwischen Staubfilter einerseits und Aktivkohlefilter andererseits möglich. Im Bereich der Mantelfläche des Filters steht infolge des dort größeren Umfangs von Haus aus mehr Volumen für die dort angeordneten Filterelemente zur Verfügung, während Filterelemente im Bereich um die Filterlängsachse infolge des dort geringeren Umfanges ein geringeres Volumen aufweisen.

Damit werden in der erfindungsgemäßen Anlage das Volumen und dadurch die Standzeiten der Grob- und Feinstaubfilter verringert, während gleichzeitig das Volumen und die Standzeiten der Aktivkohlefilterelemente vergrößert werden. Eine optimale Aufteilung des Filtervolumens ist dann gegeben, wenn die verschiedenen Filterelemente im Betrieb etwa gleiche Standzeiten aufweisen.

Durch die optimale Ausnutzung des zur Verfügung stehenden Filtervolumens können erfindungsgemäße Anlagen wesentlich kleiner, leichter und kompakter hergestellt werden. Das verringert zum einen die Herstellungskosten, zum andern wird dadurch aber auch die Montage an den auszurüstenden Fahrzeugen erleichtert, da sich infolge des geringeren Platzbedarfs zusätzliche Anbringungsmöglichkeiten auch an günstigeren Stellen eröffnen. So sind in Frage kommende Einbauplätze, wie z.B. Kotflügel, Motorabdeckungen etc. vom Boden aus leicht zugänglich.

Ein weiterer Vorteil dieser Anlage besteht darin, daß alle Filterelemente gemeinsam durch eine einzige Spannvorrichtung, z.B. am Gehäusedeckel, zwischen den Dichtflächen der vorder- und rückseitigen Filterstirnseiten eingespannt werden können.

Durch die geringen Abmessungen und das geringe Gewicht ist es nun auch möglich, daß der Betreiber die Anlage vom Fahrzeug abbaut und zur Reparatur, Überholung und Überprüfung an den Hersteller schickt. Dadurch erübrigen sich zeit- und kostenaufwendige Kundendienstbesuche.

Ein weiterer Vorteil ist, daß alle Filterelemente etwa zur gleichen Zeit verbraucht sind und somit zum gleichen Zeitpunkt gewechselt werden. Damit wird der Aufwand für einen Filterwechsel auf ein Minimum beschränkt.

Nach einer bestimmten Ausführungsform setzt sich die Filtereinheit aus mehreren ineinandersteckbaren zylinderförmigen Filterelementen zusammen. Durch das paßgenaue Abstimmen der Filterelemente aufeinander, wird die kompakte Bauweise zusätzlich unterstützt. Jedes der Elemente kann einen unterschiedlichen Filter beinhalten, so daß damit die Filtereinheit mit größtmöglicher Flexibilität an die unterschiedlichen Schadstoffemissionen der jeweiligen Einsatzorte angepaßt werden kann.

Dabei ist es auch möglich, zwei oder mehrere verschieden aufbereitete Aktivkohlefilter in Durchströmrichtung hintereinander anzuordnen. Bei unfachmännischer Kombination imprägnierter Aktivkohlefilter können sich diese in ihrer chemischen Wirkung aufheben, sofern sich die Filtermaterialien berühren. Dies ist durch das paßgenaue Ineinanderschieben der Filterelemente nicht mehr möglich, da damit eine eindeutige räumliche Trennung der einzelnen Filterelemente gegeben ist.

Eine weitere Variationsmöglichkeit ist die zusätzliche Anordnung eines Radonfilters. Dieses kann sowohl in der Filtereinheit selbst, als auch in der Gebläseeinheit angeordnet sein. Ferner kann die Filtereinheit mit einer lonisationsröhre kombiniert werden, die zusätzlich eine sterilisierende und zum Teil schadstoffabbauende Wirkung besitzt. Eine solche lonisationsröhre kann zum Beispiel im Bereich der Filterlängsachse oder auch in der Gebläseeinheit angeordnet sein. Zur Abscheidung von Feststoffpartikeln kann der Filtereinheit auch ein Zyklon vorgeschaltet sein. Darüber hinaus ist es möglich, größere Staubfilter anstelle der Aktivkohlefilter zu verwenden, wenn der Aktivkohlefilter nicht benötigt wird und es sich nur um kontaminierte Partikel handelt.

Nach einer weiteren Ausführungsform sind die Feinstaubfilter als teflonbeschichtete Membranfilter ausgebildet. Diese können bei Bedarf gereinigt und daher immer wieder verwendet werden. Zudem sind sie in der Lage, auch aerosole Bakterien und feinste Rauchteilchen zurückzuhalten.

Vorteile ergeben sich auch, wenn die einzelnen Filterelemente mit einem elektronischen Chip ausgestattet sind. Dieser Chip trägt eine bestimmte Codierung, die von einer in der Anlage installierten Spule gelesen und überprüft wird. Nur wenn die Codierung stimmt, läßt sich die Anlage in Betrieb nehmen. Dadurch ist ausgeschlossen, daß Filterelemente minderer Güte, wie sie auf dem Zubehörmarkt erhältlich sind, in den erfindungsgemäßen Anlagen verwendet werden.

Da die Chips zudem beschreibbar sind, können auf ihnen Daten über Filtertyp, Filternummer, Filterart, Zeitpunkt der Inbetriebnahme, Betriebszeit, Luftfeuchtigkeit und Temperatur, Schadstoffkonzentrationen abgespeichert werden. Mit Hilfe dieser Daten lassen sich dann wichtige Kenngrößen, wie z.B. die Reststandzeit der einzelnen Filterelemente, berechnen.

Als vorteilhaft erweist es sich femer, wenn die Gebläseeinheit einen bürstenlosen Scheibenläufermotor aufweist. Dadurch wird ein Abrieb von Kohlebürsten, wie er bei konventionellen Gleichstrommotoren entsteht, vermieden. Mit Hilfe eines solchen leistungsstarken Gebläseantriebs ist es möglich, einen hohen Druck aufzubauen, so daß auch bei höherer Verschmutzung noch vernünftige Standzeiten der Filterelemente zu erreichen sind. Der Einsatz von teflonbeschichteten Membranfiltern setzt sogar ein derart leistungsstarkes Gebläse voraus.

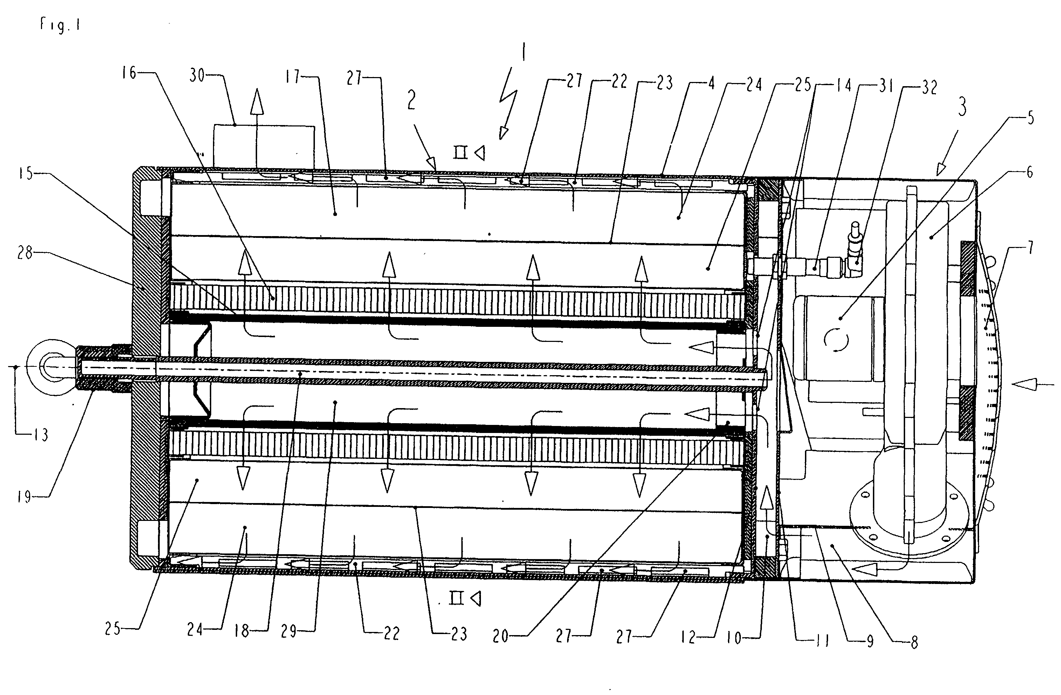

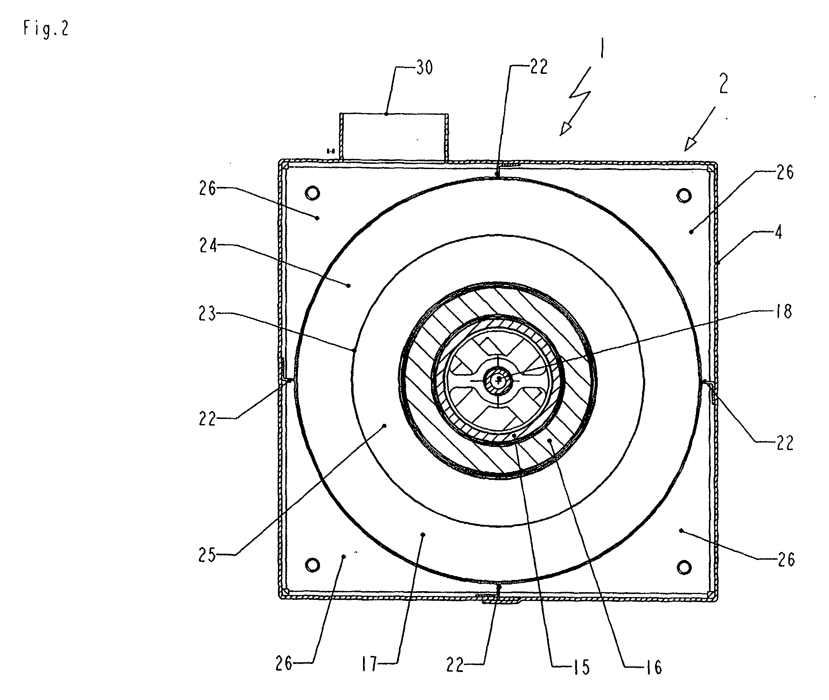

Das nachstehend anhand der Figuren 1 und 2 beschriebene Beispiel ist Keine erfindungsgemäße Anlage sondern dient lediglich dem besseren Verständnis der Erfindung. Es zeigen
- Fig. 1: einen Längsschnitt durch eine Anlage entlang der in Fig. 2 dargestellten Linie I-I und
- Fig. 2: einen Querschnitt der in Fig. 1 dargestellten Anlage entlang der Linie II-II.

In den Fig. 1 und 2 sieht man zunächst die Anlage 1. Sie besteht aus einer Filtereinheit 2 und einer Gebläseeinheit 3. Beide Einheiten sind in dem Gehäuse 4 untergebracht.

Die Gebläseeinheit 3 besteht im wesentlichen aus einem Scheibenläufermotor 5, der ein Gebläse 6 antreibt. Dadurch wird Umgebungsluft durch das stimseitige Lochblech 7 in das Gebläse 6 gesaugt und in den Luftkanal 8 gedrückt. Der Luftstrom ist durch Pfeile symbolisch dargestellt. Der Luftkanal 8 wird vom Gehäuse 4 und einem Blech 9 gebildet und führt zu einer Luftverteilungskammer 10, die von den Unterteilungsblechen 11 und 12 begrenzt ist. Im Bereich um die Filterlängsachse sind in dem Unterteilungsblech 12 Durchlaßöffnungen 14 angeordnet. Diese ermöglichen dem Luftstrom den Eintritt in die Filtereinheit 2 der Anlage 1.

Die Filtereinheit 2 besteht im wesentlichen aus dem Grobstaubfilterelement 15, dem Feinstaubfilterelement 16 und dem Aktivkohlefilterelement 17 sowie einer Verschließvorrichtung, bestehend aus einem Gewindestab 18, einer Flügelmutter 19 und einem Gehäusedeckel 28.

Das Grobstaubfilterelement 15 besitzt eine hohlzylindrische Gestalt mit kreisringförmigem Querschnitt. Es ist zentrisch zur Filterlängsachse 13 in der Filtereinheit 2 angeordnet. Als Zentrierhilfe dient dabei eine fest mit dem Unterteilungsblech 12 verbundene Endkappe 20.

Um das Grobstaubfilterelement 15 ist ein Feinstaubfilterelement 16 angeordnet. Auch es besitzt ringförmigen Querschnitt, wobei der Innendurchmesser des Feinstaubfilterelements 16 geringfügig größer ist als der Außendurchmesser des Grobstaubfilterelements 15. Weiter in Richtung Gehäuse 4 schließt sich in gleicher Weise an das Feinstaubfilterelement 16 ein Aktivkohlefilterelement 17 an. Das Aktivkohlefilterelement 17 ist durch ein Lochblech 23 unterteilt, so daß sich innerhalb des Filterelements 17 zwei hohlzylinderförmige Filterkammern 24 und 25 ergeben. Die Kammern 24 und 25 sind den Schadstoffemissionen entsprechend mit verschiedenartig aufbereiteter Aktivkohle gefüllt.

Die Abmessungen des Gehäuses 4 und der Außendurchmesser des Aktivkohlefilterelements 17 sind so aufeinander abgestimmt, daß ein gewisser lichter Abstand an der engsten Stelle eingehalten wird. Damit das Aktivkohlefilterelement 17 dennoch zentrisch in der Filtereinheit 2 gehalten ist, sind in diesem Bereich vier Stegbleche 22 zur Stützung des Aktivkohlefilterelements 17 angeordnet (Fig. 2).

Da die Filterelemente 15, 16 und 17 kreisringförmigen Querschnitt, das Gehäuse 4 aber quadratischen Querschnitt aufweist, werden durch das Gehäuse 4 die Stegbleche 22 und das Aktivkohlefilterelement 17 Luftkanäle 26 in Richtung der Filterlängsachse 13 gebildet. Ausnehmungen 27 in den Stegblechen 22 ermöglichen einen Luftaustausch zwischen den einzelnen Luftkanälen 26.

Alle Filterelemente 15, 16 und 17 lassen sich unabhängig voneinander in die Filtereinheit 2 schieben. Dadurch ist größtmögliche Flexibilität bei der Kombination der verschiedenartigen Filterelemente möglich.

Am stirnseitigen freien Ende der Filtereinheit 2 ist ein abnehmbarer Gehäusedeckel 28 angeordnet. Er dient einerseits zum Fixieren der Filterelemente 15, 16 und 17, andererseits sorgt er für einen luftdichten Abschluß des Gehäuses 4. Der Gehäusedeckel 28 wird gehalten, indem er mit Hilfe einer Art Flügelmutter 19, die auf den Gewindestab 18 aufschraubbar ist, gegen das Gehäuse 4 gepreßt wird.

Zur weiteren Ausrüstung der Anlage 1 gehören außerdem die Sensoren 31 und 32. Diese sind an dem Unterteilungsblech 11 befestigt und reichen mit ihrem einen Ende in die Filtereinheit 2. Die Sensoren 31 und 32 prüfen das Vorhandensein von Filterelementen ab und geben Alarm, falls ein Filterelement fehlen sollte.

Nachdem der Luftstrom in die Filtereinheit 2 geführt ist, kann er dort in dem durch den Grobstaubfilter 15 gebildeten zylinderförmigen Hohlraum 29 in Richtung der Filterlängsachse 13 strömen. Infolge des Überdrucks, der durch die Gebläseeinheit 3 in dem Hohlraum 29 erzeugt wird, durchdringt die Luft die einzelnen Filterelemente 15, 16 und 17 nacheinander in radialer Richtung. Dabei werden erst größere, dann feinere Feststoffpartikel zurückgehalten, bis schließlich im Aktivkohlefilterelement 17 gasförmige Schadstoffe eliminiert werden.

Nach Durchströmen der Filterelemente 15, 16 und 17 gelangt die gereinigte Luft in die Kanäle 26, von denen einer unmittelbar und die anderen mittelbar zu dem im Gehäuse 4 angeordneten Auslaßstutzen 30 führen. An den Auslaßstutzen 30 ist im Regelfall ein nicht dargestellter Luftschlauch angeordnet, der die gereinigte Luft in die Fahrerkabine eines Fahrzeugs leitet.

Das oben beschriebene Ausführungsbeispiel bezieht sich auf einen Filter, bei dem die zu reinigende Luft durch den Filter gedrückt wird. Es ist aber auch möglich, die zu reinigende Luft durch den Filter zu saugen. Voraussetzung hierfür ist die Erzeugung eines Unterdrucks in den Kanälen 26, wofür die erfindungsgemäße Anlage geringfügig abgeändert werden muß.

Der Gehäusedeckel 28 auf der Stimseite der Filtereinheit 2 wird luftdurchlässig ausgebildet, die Stirnseite der Gebläseeinheit 3 hingegen unter Wegfall des Lochblechs 7 luftundurchlässig. Des weiteren bestehen nur noch zwischen Gebläseeinheit 3 und Filtereinheit 2 Durchlässe von den Kanälen 26 zu dem Ansaugbereich der Gebläseeinheit 3. Eine direkte Verbindung zwischen Gebläseeinheit 3 und Hohlraum 29 gibt es somit nicht mehr.

Bei laufendem Gebläse 6 wird zunächst Luft aus der Gebläseeinheit 3 abgesaugt. Dadurch strömt Luft von den Kanälen 26 durch Durchlässe in die Gebläseeinheit 3 nach. In den Kanälen 26 wird dabei ein Unterdruck erzeugt, der bewirkt, daß die zu reinigende Luft von dem Hohlraum 29 radial durch die Filterelemente in die Kanäle 26 strömt. Weitere Umgebungsluft kann durch Öffnungen im Gehäusedeckel 28 ständig in den Hohlraum 29 nachströmen.

Die gereinigte Luft wird direkt vom Gebläse 6 der Fahrerkabine des Fahrzeugs zugeführt.

## Patentansprüche

1. Mobile Anlage zum Reinigen kontaminierter Luft mit einer Gebläseeinheit, einer Filtereinheit sowie Zu- und Abluftleitungen, wobei die Gebläseeinheit Umgebungsluft ansaugt, zur Reinigung durch den Filter führt und schließlich gereinigt aus der Anlage herausführt, **dadurch gekennzeichnet, daß** die Filtereinheit (2) aus mindestens einem zylinderförmigen Filterelement (15, 16, 17) besteht, bei dem an der Außenseite des Zylindermantels ein Aktivkohlefilter (17) und an der Innenseite des Zylindermantels ein Feststofffilter (15, 16) angeordnet ist und die Gebläseeinheit (3) von einem bürstenlosen Scheibenläufermotor (5) angetrieben ist.

2. Anlage nach Anspruch 1, **dadurch gekennzeichnet, daß** die Filtereinheit (2) aus mehreren zylinderförmigen Filterelementen (15, 16, 17) besteht, die ineinander verschieblich angeordnet sind.

3. Anlage nach Anspruch 1 oder 2, **dadurch gekennzeichnet, daß** der Aktivkohlefilter zweigeteilt ist und mindestens zwei Filterelemente aufweist.

4. Anlage nach einem der Ansprüche 1 bis 3, **dadurch gekennzeichnet, daß** der Feststofffilter aus einem Grobstaubfilter (15) und/oder Feinstaubfilter (16) besteht.

5. Anlage nach Anspruch 4, **dadurch gekennzeichnet, daß** der Feinstaubfilter (16) als teflonbeschichteter Membranfilter ausgebildet ist.

6. Anlage nach einem der Ansprüche 1 bis 5, **dadurch gekennzeichnet, daß** die Filtereinheit (2) einen Radonfilter aufweist.

7. Anlage nach einem der Ansprüche 1 bis 6, **dadurch gekennzeichnet, daß** der Filtereinheit (2) ein Zyklon vorgeschaltet ist.

8. Anlage nach einem der Ansprüche 1 bis 7, **dadurch gekennzeichnet, daß** die Filtereinheit (2) mit einer lonisationsröhre kombiniert ist.

9. Anlage nach einem der Ansprüche 1 bis 8, **dadurch gekennzeichnet, daß** die Filterelemente (15, 16, 17) mit einem elektronischen Chip versehen sind, der abgelesen und beschrieben werden kann.

## Claims

1. A mobile installation for purifying contaminated air, with a blower unit, a filter unit and inlet and outlet lines, wherein the blower unit draws in ambient air, directs it through the filter for purifying and, finally, the purified air passes out of the installation, **characterised in that** the filter unit (2) comprises at least one cylindrical filter element (15,16,17), in which an activated carbon filter (17) is disposed on the outside of the cylinder casing and a solid matter filter (15,16) is disposed on the inside of the cylinder casing, and the blower unit (3) is driven by a brushless disc armature motor (5).

2. An installation according to Claim 1, **characterised in that** the filter unit (2) comprises a plurality of cylindrical filter elements (15,16,17) which are arranged movable inside one another.

3. An installation according to Claim 1 or 2, **characterised in that** the active carbon filter is divided in two and has at least two filter elements.

4. An installation according to any one of Claims 1 to 3, **characterised in that** the solid matter filter comprises a coarse dust filter (15) and/or a fine dust filter (16).

5. An installation according to Claim 4, **characterised in that** the fine dust filter (16) is in the form of a Teflon-coated diaphragm filter.

6. An installation according to any one of Claims 1 to 5, **characterised in that** the filter unit (2) has a radon filter.

7. An installation according to any one of Claims 1 to 6, **characterised in that** a cyclone is connected upstream of the filter unit (2).

8. An installation according to any one of Claims 1 to 7, **characterised in that** the filter unit (2) is combined with an ionisation tube.

9. An installation according to any one of Claims 1 to 8, **characterised in that** the filter elements (15,16,17) are provided with an electronic chip which can be read and written.

## Revendications

1. Appareil mobile pour l'épuration de l'air pollué, comprenant une unité de soufflage, une unité de filtrage, ainsi que des conduites d'admission et d'évacuation, l'unité de soufflage aspirant l'air ambiant, qui est acheminé en vue d'une épuration à travers le filtre et, finalement, est évacué à l'état épuré hors de l'appareil, **caractérisé en ce que** l'unité de filtrage (2) est formée par au moins un élément de filtrage (15, 16, 17) en forme de cylindre, dans lequel un filtre à charbon actif (17) est disposé contre la face extérieure de la paroi latérale du cylindre et un filtre en matière solide (15, 16) est agencé contre la face intérieure de la paroi latérale du cylindre, et l'unité de soufflage (3) est actionnée par un moteur à entrefer plat (5) sans brosse.

2. Appareil selon la revendication 1, **caractérisé en ce que** l'unité de filtrage (2) est formée par plusieurs éléments de filtrage (15, 16, 17) cylindriques, qui sont conçus de manière à coulisser l'un dans l'autre.

3. Appareil selon la revendication 1 ou 2, **caractérisé en ce que** le filtre à charbon actif est séparé en deux et comporte au moins deux éléments de filtrage.

4. Appareil selon une des revendications 1 à 3, **caractérisé en ce que** le filtre en matière solide est formé par un filtre pour poussière grossière (15) et/ou un filtre pour poussière fine (16).

5. Appareil selon la revendication 4, **caractérisé en ce que** le filtre pour poussière fine (16) est conçu sous forme d'un filtre microporeux avec un revêtement en téflon.

6. Appareil selon une des revendications 1 à 5, **caractérisé en ce que** l'unité de filtrage (2) comporte un filtre pour radon.

7. Appareil selon une des revendications 1 à 6, **caractérisé en ce qu'**un séparateur à cyclone est disposé en amont de l'unité de filtrage (2).

8. Appareil selon une des revendications 1 à 7, **caractérisé en ce que** l'unité de filtrage (2) est combinée à un tube d'ionisation.

9. Appareil selon une des revendications 1 à 8, **caractérisé en ce que** les éléments de filtrage (15, 16, 17) sont munis d'une puce électronique, sur laquelle il est possible de lire et d'écrire des données.
